# FASCICULE DE BREVET EUROPEEN

(11) **EP 0 992 102 B1**
(45) Date de publication et mention de la délivrance du brevet: **02.01.2002**
(21) Numéro de dépôt: 98933690.4
(22) Date de dépôt: 23.06.1998
(51) Int. Cl.: H02K 11/00, H02K 5/22, G01P 3/488

(54) **MOTOREDUCTEUR D'ACTIVATION D'UN ORGANE FONCTIONNEL DE VEHICULE AUTOMOBILE**
GETRIEBEMOTOR ZUR AKTIVIERUNG EINES FUNKTIONELLEN ELEMENTES EINES KRAFTFAHRZEUGES
GEAR MOTOR ACTIVATING A MOTOR VEHICLE FUNCTIONAL MEMBER

(30) Priorité: 24.06.1997 FR 9707865
(43) Date de publication de la demande: 12.04.2000
(73) Titulaire: Meritor Light Vehicle Systems-France, 92082 Paris La Defense 2 (FR)
(72) Inventeur: LEMPERIERE, Marianne, Gabrielle, F-14000 Caen (FR)
(74) Mandataire: Jacobson, Claude
(86) Numéro de dépôt international: FR9801318
(87) Numéro de publication internationale: WO9859408

(56) Documents cités:
- EP-A- 0 388 142
- EP-A- 0 603 083
- WO-A-97/16883
- DE-A- 4 324 622
- DE-U- 9 006 935
- FR-A- 2 698 216
- US-A- 5 489 844
- PATENT ABSTRACTS OF JAPAN vol. 095, no. 006, 31 juillet 1995 & JP 07 067293 A (ASMO CO LTD;OTHERS: 01), 10 mars 1995

## Description

La présente invention concerne un motoréducteur d'activation d'un organe fonctionnel de véhicule automobile.

On connaît déjà dans l'état de la technique, de nombreux motoréducteurs de ce type qui comportent un moteur électrique à courant continu à l'extrémité duquel est disposé un carter de réducteur, dans lequel sont disposés des moyens de détection de la vitesse et du sens de rotation du moteur, comportant une roue magnétique codée associée à l'arbre de sortie du moteur et au moins deux cellules à effet Hall décalées l'une par rapport à l'autre, dont la sortie est adaptée pour être reliée à des moyens de traitement/conditionnement de signaux.

De tels motoréducteurs sont par exemple utilisés pour assurer l'activation de vitres électriques, de toits ouvrants électriques ou autres de véhicules automobiles.

Il est nécessaire, pour différentes raisons, de connaître la vitesse et le sens de rotation de ce moteur afin d'en contrôler le fonctionnement.

On a donc implanté dans ces moteurs, des moyens qui permettent de relever ces paramètres en utilisant une roue magnétique codée fixée par exemple sur l'arbre de sortie au moteur, cette roue magnétique codée étant associée à au moins deux cellules à effet Hall.

On pourra par exemple se reporter aux documents US-A-4 857 784, US-A-5 422 551 et US-A-5 500 535 qui décrivent de telles structures.

Cependant, dans tous les motoréducteurs de l'état de la technique, les cellules à effet Hall sont disposées en regard du bord périphérique de la roue magnétique codée, dans l'alignement de celle-ci.

Or, cette disposition présente un certain nombre d'inconvénients, notamment au niveau de la précision requise pour le montace de ces cellules à effet Hall et de l'encombrement résultant du motoréducteur.

En effet, on sait que pour fonctionner correctement, ces cellules à effet Hall doivent être disposées de manière relativement précise par rapport à la roue magnétique codée, de sorte que pour obtenir un tel positionnement précis, il est nécessaire de contrôler avec précision la fabrication et le montage des motoréducteurs.

Par ailleurs, la disposition des cellules à effet Hall dans le prolongement de la roue magnétique codée, augmente l'encombrement radial de ce motoréducteur.

Le but de l'invention est donc de résoudre ces problèmes.

A cet effet, l'invention a pour objet un motoréducteur d'activation d'un organe fonctionnel de véhicule automobile, du type comportant un moteur électrique à courant continu à l'extrémité duquel est disposé un carter de réducteur, dans lequel sont disposés des moyens de détection de la vitesse et du sens de rotation du moteur, comportant une roue magnétique codée associée à l'arbre de sortie du moteur et au moins deux cellules à effet Hall décalées l'une par rapport à l'autre, dont la sortie est adaptée pour être reliée à des moyens de traitement/conditionnement de signaux, caractérisé en ce que les cellules à effet Hall sont placées en regard d'au moins une partie d'une face latérale de la roue codée entre celle-ci et des moyens de concentration de flux magnétique.

L'invention sera mieux comprise à l'aide de la description qui va suivre, donnée uniquement à titre d'exemple et faite en se référant aux dessins annexés, sur lesquels :
- la Fig.1 représente une vue schématique en coupe partielle d'un motoréducteur d'activation selon l'invention; et
- la Fig.2 représente une vue de face d'un exemple de réalisation de moyens de concentration de flux magnétique entrant dans la constitution d'un tel motoréducteur.

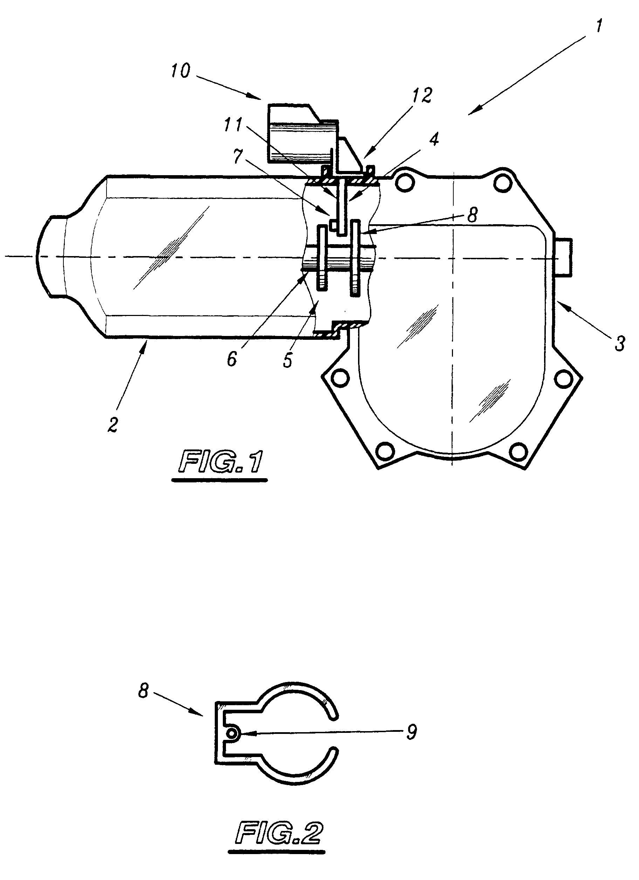

On reconnaît en effet sur la figure 1, un motoréducteur d'activation d'un organe fonctionnel de véhicule automobile, désigné par la référence générale 1.

Un tel motoréducteur comporte de façon générale, un moteur électrique à courant continu désigné par la référence générale 2, à l'extrémité duquel est disposé un carter de réducteur désigné par la référence générale 3.

Le carter peut par exemple être réalisé en matière plastique et des moyens de détection de la vitesse et du sens de rotation du moteur sont disposés dans celui-ci.

Ces moyens sont désignés par la référence générale 4 sur cette figure.

En fait, ces moyens peuvent comporter de façon classique, une roue magnétique codée désignée par la référence générale 5, associée à l'arbre de sortie 6 du moteur 2 et au moins deux cellules à effet Hall décalées l'une par rapport à l'autre dont la sortie est adaptée pour être reliée à des moyens de traitement/conditionnement de signaux.

Sur la figure 1, on a représenté une seule cellule à effet Hall, celle-ci étant désignée par la référence générale 7.

Selon l'invention, les cellules à effet Hall sont placées en regard d'au moins une partie d'une face latérale de la roue codée 6, entre celle-ci et des moyens de concentration de flux magnétique désignés par la référence générale 8 sur cette figure.

On conçoit alors qu'au lieu d'être disposées en regard du bord périphérique de cette roue codée comme dans l'état de la technique, dans le motoréducteur selon l'invention, ces cellules à effet Hall sont disposées en regard d'une face latérale de celle-ci.

Pour permettre un fonctionnement optimum de ces cellules, il est alors nécessaire de prévoir des moyens de concentration de flux magnétique derrière ces cellules par rapport à la roue magnétique codée.

En fait, les cellules à effet Hall et les moyens de concentration de flux peuvent être disposés au niveau du bord périphérique de cette roue codée, comme cela est illustré.

Ces moyens de concentration de flux magnétique 8 peuvent par exemple comporter au moins une rondelle en matériau magnétique, comme celle illustrée sur la figure 2.

On reconnaît en effet sur cette figure 2, la rondelle 8 de concentration de flux, qui est ouverte à l'une de ses extrémités pour faciliter son montage autour de l'arbre du moteur et qui comporte à son autre extrémité, des moyens de fixation sur le reste du carter de réducteur.

Ces moyens de fixation peuvent par exemple comporter un trou 9 de cette rondelle adapté pour s'engager autour d'un pion du reste du carter pour assurer la fixation de cette rondelle.

Bien entendu, d'autres modes de réalisation de ces moyens de concentration de flux magnétique peuvent être envisagés.

Les cellules à effet Hall par exemple 7 peuvent être portées par un connecteur de raccordement du moteur au reste des circuits du véhicule.

Ce connecteur est désigné par la référence générale 10 sur cette figure 1 et comporte par exemple une plaque de circuit imprimé désignée par la référence générale 11 sur laquelle sont fixées les cellules à effet Hall par exemple 7, et éventuellement des moyens d'alimentation de celles-ci et des moyens de traitement/conditionnement des signaux de sortie de celles-ci de type classique.

A cet effet, le carter de réducteur 3 comporte au moins un puits de réception de ce connecteur, ce puits étant désigné par la référence générale 12.

Le carter de réducteur 3 peut comporter deux puits opposés permettant d'assurer la réception du connecteur dans sa partie supérieure ou dans sa partie inférieure respectivement, pour adapter la configuration du motoréducteur obtenu à la configuration de la partie du véhicule destinée à recevoir ce motoréducteur.

De façon classique, le connecteur 10 et le carter 3 de réducteur peuvent comporter des moyens d'accrochage par encliquetage élastique et un joint d'étanchéité peut être disposé entre le connecteur et le carter.

Bien entendu, d'autres modes de réalisation de ce motoréducteur peuvent être envisagés.

On conçoit alors que le motoréducteur selon l'invention présente un certain nombre d'avantages par rapport aux motoréducteurs de l'état de la technique, dans la mesure où la disposition particulière des cellules à effet Hall permet d'une part, de réduire l'encombrement radial du motoréducteur et d'autre part d'obtenir une bonne détection du sens et de la vitesse de rotation du moteur en associant à ces cellules, des moyens de concentration de flux magnétique.

## Revendications

1. Motoréducteur d'activation d'un organe fonctionnel de véhicule automobile, du type comportant un moteur électrique (2) à courant continu à l'extrémité duquel est disposé un carter de réducteur (3), dans lequel sont disposés des moyens (4) de détection de la vitesse et du sens de rotation du moteur, comportant une roue magnétique codée (5) associée à l'arbre de sortie (6) du moteur et au moins deux cellules à effet Hall (7) décalées l'une par rapport à l'autre, dont la sortie est adaptée pour être reliée à des moyens de traitement/conditionnement de signaux, **caractérisé en ce que** les cellules à effet Hall (7) sont placées en regard d'au moins une partie d'une face latérale de la roue codée (5) entre celle-ci et des moyens (8) de concentration de flux magnétique.

2. Motoréducteur selon la revendication 1, **caractérisé en ce que** les cellules à effet Hall (7) et les moyens de concentration de flux magnétique (8) sont disposés au niveau du bord périphérique de la roue codée (5).

3. Motoréducteur selon la revendication 1 ou 2, **caractérisé en ce que** les moyens de concentration de flux magnétique comprennent au moins une rondelle (8) en matériau magnétique.

4. Motoréducteur selon l'une quelconque des revendications précédentes, **caractérisé en ce que** les moyens de concentration de flux magnétique comportent des moyens (9) de fixation sur le reste du carter de réducteur (3).

5. Motoréducteur selon l'une quelconque des revendications précédentes, **caractérisé en ce que** les cellules à effet Hall sont reliées à un connecteur (10) de raccordement du moteur au reste des circuits du véhicule.

6. Motoréducteur selon la revendication 5, **caractérisé en ce que** les cellules à effet Hall (7) sont fixées sur une plaque de circuit imprimé (11) reliée au connecteur (10) et sur laquelle sont disposés les moyens de traitement/conditionnement des signaux de sortie de celles-ci.

7. Motoréducteur selon l'une quelconque des revendications 5 ou 6, **caractérisé en ce que** le carter de réducteur (3) comporte au moins un puits (12) de réception du connecteur (10).

8. Motoréducteur selon la revendication 7, **caractérisé en ce que** le carter de réducteur (3) comporte deux puits opposés, de réception du connecteur (10) dans sa partie supérieure ou sa partie inférieure.

9. Motoréducteur selon l'une quelconque des revendications 5,6,7 ou 8, **caractérisé en ce que** le connecteur (10) et le carter (3) de réducteur comportent des moyens d'accrochage élastiques complémentaires.

10. Motoréducteur selon la revendication 9, **caractérisé en ce qu'**un joint d'étanchéité est disposé entre le connecteur (10) et le carter de réducteur (3).

## Patentansprüche

1. Getriebemotor zur Aktivierung eines funktionellen Elements eines Kraftfahrzeug mit einem Gleichstromelektromotor (2), an dessen Ende ein Getriebegehäuse (3) angeordnet ist, in dem Mittel (4) zur Erfassung der Geschwindigkeit und der Drehrichtung des Motors angeordnet sind, die ein kodiertes Magnetrad (5), das der Ausgangswelle (6) des.Motors zugeordnet ist, und mindestens zwei gegeneinander versetzte Halleffektzellen (7) umfassen, deren Ausgang dafür ausgelegt ist, mit Mitteln zum Verarbeiten/Aufbereiten von Signalen verbunden zu werden, **dadurch gekennzeichnet, dass** die Halleffektzellen (7) gegenüber mindestens einem Teil einer Seitenfläche des kodierten Rads (5) zwischen diesem und Mitteln (8) zur Konzentration des Magnetflusses angeordnet sind.

2. Getriebemotor nach Anspruch 1, **dadurch gekennzeichnet, dass** die Halleffektzellen (7) und die Mittel (8) zur Konzentration des Magnetflusses auf Höhe des Umfangsrandes des kodierten Rads (5) angeordnet sind.

3. Getriebemotor nach Anspruch 1 oder 2, **dadurch gekennzeichnet, dass** die Mittel zur Konzentration des Magnetflusses mindestens eine Scheibe (8) aus magnetischem Material umfassen.

4. Getriebemotor nach einem der vorhergehenden Ansprüche, **dadurch gekennzeichnet, dass** die Mittel zur Konzentration des Magnetflusses Mittel (9) zur Befestigung am übrigen Getriebegehäuse (3) umfassen.

5. Getriebemotor nach einem der vorhergehenden Ansprüche, **dadurch gekennzeichnet, dass** die Halleffektzellen mit einem Verbinder (10) zum Anschluss des Motors an die übrigen Stromkreise des Fahrzeugs verbunden sind.

6. Getriebemotor nach Anspruch 5, **dadurch gekennzeichnet, dass** die Halleffektzellen (7) auf einer gedruckten Schaltungsplatte (11) befestigt sind, die mit dem Verbinder (10) verbunden ist und auf der die Mittel zum Verarbeiten/Aufbereiten ihrer Ausgangssignale angeordnet sind.

7. Getriebemotor nach einem der Ansprüche 5 oder 6, **dadurch gekennzeichnet, dass** das Getriebegehäuse (3) mindestens einen Schacht (12) zur Aufnahme des Verbinders (10) aufweist.

8. Getriebemotor nach Anspruch 7, **dadurch gekennzeichnet, dass** das Getriebegehäuse (3) zwei einander entgegengesetzte Schächte zur Aufnahme des Verbinders (10) in seinem oberen Teil oder in seinem unteren Teil aufweist.

9. Getriebemotor nach einem der Ansprüche 5, 6, 7 oder 8, **dadurch gekennzeichnet, dass** der Verbinder (10) und das Getriebegehäuse (3) einander ergänzende elastische Einhakmittel aufweisen.

10. Getriebemotor nach Anspruch 9, **dadurch gekennzeichnet, dass** zwischen dem Verbinder (10) und dem Getriebegehäuse (3) ein Dichtring angeordnet ist.

## Claims

1. Gear motor activating a motor vehicle functional member, of the type including a direct current electric motor (2), at the end of which is arranged a reduction gearbox case (3), wherein are provided means (4) of sensing the speed and the rotating direction of the engine, including a coded magnetic wheel (5) associated with the engine output shaft (6) and at least two mutually offset cells with Hall effect (7), the output of which is adapted to be connected with means of processing/conditioning signals, **characterised in that** the cells with Hall effect (7) are located opposite at least part of the coded wheel (5) side surface between the latter and means (8) for concentrating the magnetic flux.

2. Gear motor according to claim 1, **characterised in that** the Hall effect cells (7) and the means (8) for concentrating the magnetic flux are arranged at the peripheral edge of the coded wheel (5).

3. Gear motor according to claim 1 or 2, **characterised in that** the means for concentrating the magnetic flux include at least one shim (8) made from magnetic material.

4. Gear motor according to any of the previous claims, **characterised in that** the means for concentrating the magnetic flux include means (9) of fixation onto the rest of the case of the gear motor (3)

5. Gear motor according to any of the previous claims, **characterised in that** the Hall effect cells are linked to a connector (10) for connection of the motor to the rest of the vehicle circuits.

6. Gear motor according to claim 5, **characterised in that** the Hall effect cells (7) are fixed onto a printed circuit board (11) joined to the connector (10) and on which are arranged means of processing/ conditioning the output signals thereof.

7. Gear motor according to either of claims 5 or 6, **characterised in that** the case of the gear motor (3) includes at least one cavity (12) to accept the connector (10).

8. Gear motor according to claim 7, **characterised in that** the case of the gear motor (3) includes two opposing cavities, into which the connector (10) fits, in its upper part or its lower part.

9. Gear motor according to any of claims 5, 6, 7 or 8, **characterised in that** the connector (10) and the case (3) of the gear motor include complementary elastic means of coupling.

10. Gear motor according to claim 9, **characterised in that** a gasket is arranged between the connector (10) and the case of the gear motor (3).
